# EUROPEAN PATENT SPECIFICATION

(11) **EP 2 201 547 B1**
(45) Date of publication and mention of the grant of the patent: **16.04.2014**
(21) Application number: 08807590.8
(22) Date of filing: 10.09.2008
(51) Int. Cl.: G08B 31/00, H04N 7/18

(54) **VIDEO SURVEILLANCE METHOD AND SYSTEM**
VIDEOÜBERWACHUNGSVERFAHREN UND SYSTEM
DISPOSITIF DE VIDÉO SURVEILLANCE

(30) Priority: 14.09.2007 IT AV20070003 U
(43) Date of publication of application: 30.06.2010
(73) Proprietor: ENERGIA E TRASPORTI S.R.L., 00141 Roma (IT)
(72) Inventor: Spiniello, Silvio, 83024 Monteforte Irpino (IT)
(74) Representative: Turini, Laura
(86) International application number: PCT/IB2008/053653
(87) International publication number: WO 2009/034531

(56) References cited:
- EP-A- 1 388 802
- WO-A-03/047258
- WO-A-2005/091638
- WO-A-2006/132686
- US-A1- 2004 117 638

## Description

### Technical Field

The present invention refers to the technical field of public safety. In particular it refers to an innovation in the field of video surveillance for the identification and locating of subjects in general.

### State of the Art

Since far back are known systems of video surveillance used to guarantee the safety practically in any kind of environment. Systems of video camera surveillance are thus commonly used in places with high risk of acts of violence such as airports, train and metro stations, public and private places of interest. The same devices are then commonly used in institutions of various kind as banks, post offices, jewelleries and similar and also in private fields.

However the nowadays safety systems are limited exclusively to a simple acquisition of images. This means that, in the case for example of bank robberies, the acquired images are analysed by employees. The investigators and the employees are thus obliged to observe with attention all the images and the acquired details in order to individuate useful clues for the identification of the person or people involved in the crime.

Obviously, in the case where this last one has covered-face, the identification becomes really difficult and the only usable and useful information are the body build, the clothing and other marginal details. Even though such details could be very important, it is well known how these could be easily disguisable. A clothing is indeed easily recyclable, the hair and the beard can be cut/shaved or grown and, when there isn't a complete and clear vision of the face of the person, the changes in these details could easily divert to the investigators.

In this case there is the need to reconstruct an identikit of the "suspected" person and disseminate it hoping to receive useful detections.

In the unlikely case where, on the other hand, the violator has open-face, the information on his looking is acquired with sureness but, also in this case, it is simply disseminated to other security departments. Its finding and locating remains still to depending on the human ability of the investigators and also to the luck. Nowadays, indeed, once the acquired images are disseminated, all the investigation's departments mobilize to find the interested person and placing road and check blocks, and what else is necessary for the individuation.

Also in this case, however, the ability of masking of the person can anyway disguise the investigators making harder or even impossible its recognition. Nowadays it is practically accessible to everyone the plastic surgery and it is not excluded to recur to surgery with specialized personnel that is unaware and that in bona fide operates to modify the appearance of the person.

Moreover the collaboration of other persons involved can contribute to hide and to make the locating really difficult. Nowadays are many the cases of terrorists and fugitives of who it is known a clear image, but despite that, are still unreachable. At this time the only research source is the institution of rewards to anyone who supplies information that are useful for the case.

WO 03/047258 A discloses a distributed surveillance system that allows for the digital storage of data, as well as the recognition of external patterns by comparison between images or sound obtained from cameras to patterns representing an object, such as the face of a person.

EP 1 388 802 A discloses a face identification technique and device. A detection unit detects face images from images taken by surveillance cameras. A determination unit determines a match between a detected face image of a specific person and a face image stored in a storage device. An abstraction unit applies an abstraction process to the detected face image to make the face image unrecognizable for privacy reasons when no match is determined.

### Disclosure of invention

It is therefore the aim of the present invention to give a new system of video surveillance which is capable to exceed the above mentioned inconvenient.

In particular it is the aim of the present invention to give a new type of video surveillance device and a method of use of the same that allows not only to memorize the images but also to search and individuate particular individuals in a dynamic manner, without the necessity of an exclusive human analysis in all the details.

These and other aims are reached with the present method for the individuation and/or identification of persons as defined in claim 1.

Advantageously the research operation by means of image overlap is made in the main DPC (1) through a software. In this phase, the software converts the reference image and the images in the database of the main DPC- into numerical matrixes. Each number of the matrix will associate thus a brightness of the image's point.

in this way, by simply inserting in the main DPC a search request, this last one will start an analysis of all the images archived in it realizing an overlap respect to the reference image. The software will scan or rather transform the image into numerical matrix and will make the comparison.

with such aim the comparison by overlap comprises a numerical difference of the reference matrix with the matrixes representing the acquired data.

Obviously the comparison data contained in the main DPC must, at least, inform about the position and time in which the specific image has been taken.

Advantageously, in the case there is a positive result in the research within the main DPC (1), this last one will forward a informative result (5), The undertaken result will comprise information regarding the place and time in which the person was found

In this manner the operators of the control centre of the main DPC will have the opportunity to inform the safety authorities found closed to the located place followed by the informative result.

Advantageously the main DPC sends said positioning of the person to the peripheral DPC found in the place closest to the positioning result, activating the respective video cameras for a dynamic research.

This will allow the individuation of the person along to the specific alert of the located personnel.

In case of a negative result of the research within the main DPC (!), this last one forwards a request of image overlap research to all or part of said peripheral DPC (2).

Obviously, for negative result is to be intended not only a research that has not given any presence of the individual in the database of the main DPC, but also a positive result which is too old in terms of time. Indeed, the recognition of an individual through the Main DPC located in an area only few days before, is to be considered a non sufficient information, having this last one had enough time to move somewhere else.

For this aim each peripheral DPC (2) effects an overlap operation of the image reference with the images that are constantly acquired further to a request by the main DPC.

Advantageously, in case of positive result of the research, the peripheral DPC forwards the information to the main DPC (1). In this way the main DPC forwards the informative result (5) and activates all the video cameras placed close to the located place for a dynamic search of the individual.

Advantageously the acquisition operation of the audio and/or video data allows the acquisition of enlarged images such as to allow an overlap of biometric images type of the person, as the iris of the eye or similar.

Moreover it is provided the further insertion of informative data inside the main DPC by external users, said main DPC being connected through the network to external user's portals.

In this way anyone who has useful information, can always update the big main Database.

Thus it follows also the description of the safety device for the individuation and/or identification of persons as defined in claim 8.

Moreover the software realizes a conversion of the images into numerical matrix and their following overlapping.

As said, it is provided at least an external portal connected to the main DPC for the insertion of data from external users.

Moreover each peripheral DPC (2) along to the video cameras (3) connected directly to it, is assigned to predetermined areas. In this way are created real surveillance islands.

Moreover al the peripheral DPC (2) are connected through network to each other allowing a reciprocal communication of information, said peripheral DPC being then connected to the main DPC.

### Brief description of drawings

Further features and advantages of this video surveillance device, according to the invention, will be clearer with the description of one of its pattern realization that follows, made to illustrate but not limit, with reference to the annexed drawings, in which:
- figure 1 schematically shows the functioning block of the present invention;
- figure 2 schematically shows a connection between the peripheral DPC placed distant to each other to allow the communication and exchange of information processes.
- figure 3 shows a logic block diagram of functioning of the present diagram;

### Description of a preferred pattern realization

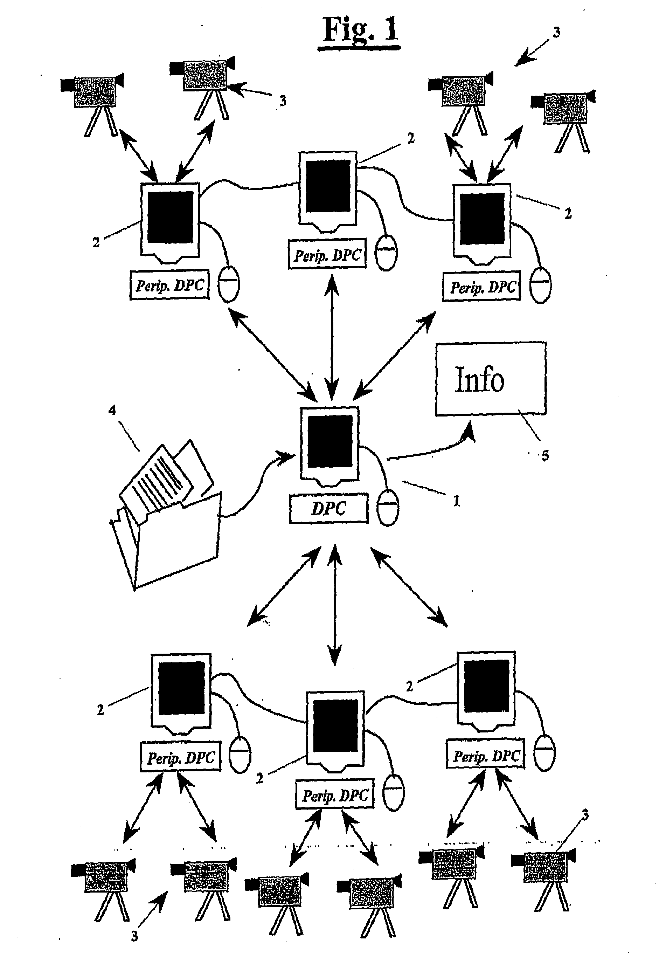

With reference to figure 1, it is described the functioning and the device in its assemblage relative to the present invention.

The undertaken system provides the use of means of audio and/or video data acquisition such as video cameras 3 and/or high resolution video cameras. As well known, these are actually used in strategic points of surveillance as airports and train stations. Nowadays, however, are limited to a simple memorization of data while, at the same time, employees control by means of monitors live, or only in a second time, the acquired images. Moreover these last ones work in an independent manner, or rather the video cameras placed in a predetermined area of surveillance, as for example an airport, are not connected and communicating to the other video cameras found in other areas of the airport.

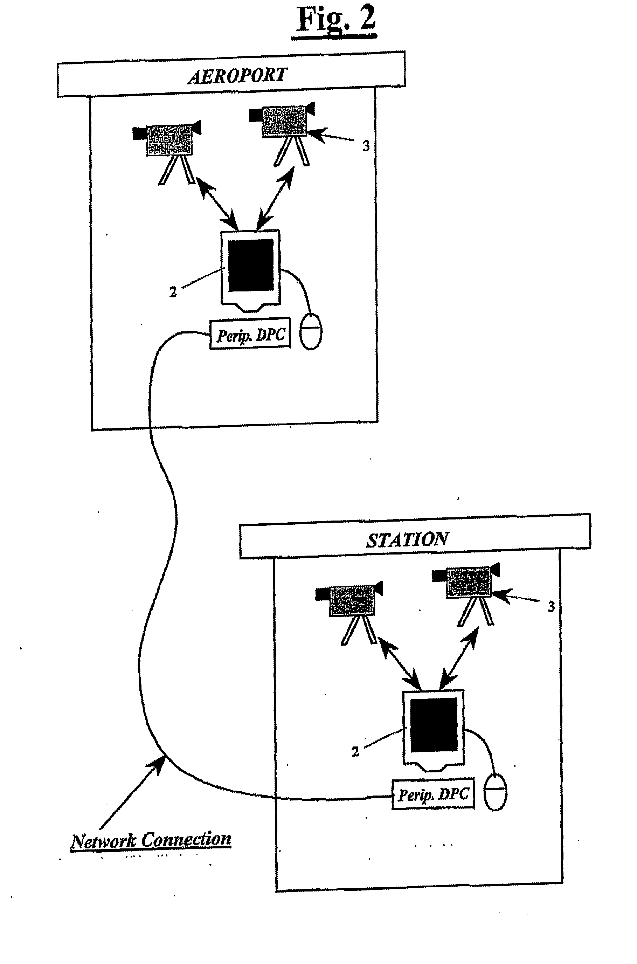

The present invention (look at figure 1) comprises the use of a plurality of Peripheral Data Processing Centres 2, called peripheral DPC, in combination to the above mentioned means of acquisition as, for example, video cameras 3 and/or high resolution video cameras 3 and connected all to each other with the respective DPC. The video cameras, along to their DPC, can be placed in different points and areas also very distant to each other, defending this way specific groups (look at figure 2).

Figure 2, for example, highlights the case where the peripheral DPC 2, in combination to its video cameras 3, is installed as an airport coverage and connected trough the network to another DPC placed in a train station also in a different city. The peripheral DPC are thus all communicating to each other thanks to the network connection (look at figure 1 and 2). The peripheral DPC are electronic processors, as computers and similar, able to process and contain all the information received by the respective video cameras. Thus it is possible to realize a network of video cameras placed anywhere and in different parts of the world which on network (as for example internet) communicate to each other.

Obviously nothing would avoid to easily connect to the network, though the connection to the peripheral DPC 2, systems of video/audio acquisition already installed and present. In this way is possible to considerably increase the control network without necessarily having to incur into high costs for the entire renovation of all the video cameras.

Other video cameras could on the other hand be installed in main streets and in any desired part with the aim to be able to monitor also the sides of the city retained more at risk.

The peripheral DPC are then connected to a main DPC (look at figure 1) that receives all the information that the video cameras acquire which are then sent to it through the respective peripheral DPC. The main DPC is also capable to contain and process different data, or rather shootings, images, voices and what else is reproducible and extractable from an audio/video shooting also in high resolution. In particular the use of high resolution video cameras would allow the specific acquisition of biometric data of the person, as for example the iris of the eye. All the data that are sent to it are then memorized and maintained for a predetermined prefixed time.

Indeed the main DPC can contain data that are not only transmitted from the peripheral DPC and assimilated from the video cameras, but also specific data of each citizen as an image of fingertips, an image of the iris of the eye and/or a photo. In this way the main DPC becomes a huge database that is continuously updated with shooting images and archive images as the one of an ID.

A simple organization of the memories of the main DPC will allow the storage of all the above said data in order to distinguish and separate the data acquired from the video cameras and the data from the citizens' archive reproducing, as mentioned, images and biometric data as fingerprints and iris.

In particular the main DPC and the peripheral DPC are organized according to the memories' order that comprises three big sections. The first one is relative to the dynamic images, (or rather the video shots); the second one comprises all the static images (as photos, pauses fingerprints and similar) and the third exclusively the audio recordings. Moreover the data, as mentioned received by the peripheral DPC or inserted by an external portal, are organized in geographical position.

As it will be better explained in the functioning that follows, this type of organization makes simply more functional the DPC avoiding the mixing of data that are too much different from each other (for example exclusively audio data memorized together to exclusively video type data) and allows a better management.

It follows the description of the functioning method of the present invention.

The innovative invention consists thus in the exploitation of this network system that allows a research of the person not exclusively depending on the attention of the personnel. In an initial phase (look at figure 1) of research is thus inserted a research 4 or reference data into the main DPC, as for example the identikit or images relative to a wanted person or also biometric data or exclusively audio data.

In the case of image type data, the main DPC will start a static analysis of the same (or rather an overlap of paused images) basing on all the data contained in the archive.

In this case, if the inserted data is for example a photo, the main DPC will search in its database relative to the second group (or rather a photo and paused images). Obviously this is exactly equivalent for the other described groups of memory organization. Obviously in the case of videos in movement there will be processed some paused images.

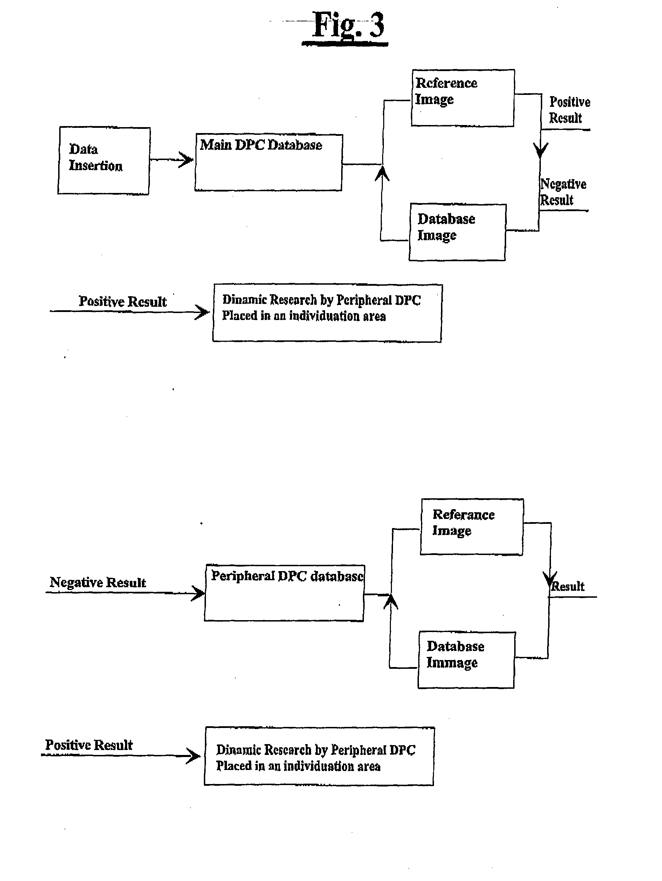

As described schematically in figure 3, the static analysis uses the technique of image analysis. In particular the reference image (paused images, photos and similar) is scanned and thus converted into numerical matrices. The image is just a set of pixel where each of them is defined by a colour with a predetermined intensity. An appropriate software program is then able to elaborate each image and associate it to a numerical matrix where each number (value that is generally between 1 and 100) represents a pixel with a predetermined brightness. The image this way converted will be compared to the images contained in the database which are also converted into numerical matrices. Obviously all the images received by the DPC will also be ordered into areas relative to their location. Moreover the positioning of all the video cameras will be such to allow the acquisition of images in a position that is more or less equivalent to the ones of an image with frontal face.

The DPC will compare the scanned image in input with all the images in the database (both of the citizens file and the ones acquired from the video cameras)by processing a static overlapping. The software will overlap thus the numerical matrix in input to the numerical matrix representing the individuals in the database acquired in a predetermined time, making a comparison by means for example of a simple numerical subtraction. In the case of a matrix with null or almost difference, means that the faces coincide.

The overlapping of an image can happen only with paused images, this is why the video in movement contained in the main DPC will have to be elaborated as paused imaged in order to use them and overlap them on the reference image.
in the case of positive locating (or rather an image in the database that coincides to a reference image), the main DPC will forwards a signal of dynamic search (or rather a live research) to all the peripheral DPC close to the area where the individual has been individuated. For dynamic research it is intended thus a live re-shot of all the video cameras in the interested area, with alerted personnel in order to individuate the person.

According thus to the functioning procedure, further to a positive static research, the main DPC will forward an informative result 5(look at figure 1) in such a way that the operators can communicate with the other operators found in the interested zone for a further alert. Each peripheral DPC will continue its shooting while the alerted personnel will search for the wanted man. Obviously the dynamic research is activated when the positive result of the main DPC is relative to a non old individuation.

In the case of negative result of the initial phase of the process of the main DPC (still look at figure 3) or "old" positive result (for example an image of reference date back to few days), the static research will then be used at each peripheral DPC. The main DPC will send the reference image or the video to the peripheral DPC and these will start a static analysis on all the images recently acquired. Obviously, with the aim to improve the research and make the calculation not too heavy, there will be scanned paused images in predetermined acquisition time intervals. In the case of an eventual finding (that could need a timing more or less long), the interested peripheral DPC will send a signal to the main DPC with information such as time and position of the found person. The main DPC will activate all the peripheral DPC close to the person individuation zone for a dynamic research while the issued informative result 5 will allow the operators to communicate with the operators of the interested zones for an alert.

Obviously it is clear how this method of "search and find the person" can efficiently use not only the standard images of human faces, but, as already mentioned, also biometric data. Indeed the use of high resolution video cameras, opportunely placed, makes easy the acquisition of biometric details, as iris. These do not change in time even through major operations and, similarly to fingerprints, are an unquestionable personal signature of the person. A comparison, thus, of biometric data makes the individuation of the person safe and camouflages of different kind will not be anymore sufficient to mislead an "eye" of electronic and not anymore exclusively human type.

In all the described cases, it is then possible to comprise the insertion of acquired data in the main DPC by external users. Specific portal connected on line to the main DPC, will allow to every user the insertion of data retained useful for the individuation of predetermined individuals, being them disappeared or considered dangerous. A simple availability on Internet, for example, of the main DPC will easily allow a continuous update.

Obviously, similarly to what has been described, an exclusively audio sound overlap can easily made in order to search and individuate the person.

Another type of use similar to the present method comprises the verification of offences towards suspected persons. Indeed, if the place where the crime took place is known, in the same manner as it has been described, can be analysed as described all the shootings made in the day and place of the crime (data contained in the peripheral DPC of the area and sent to the main DPC), At this point the already described image overlapping technique verifies very easily if ever the suspected person has in any way really passed in that area, for example with covered , camouflaged face or in another way. Practically the paused images of the database' video are processed and overlapped to a detail of a reference image of the suspected person.

It is now clear how the aims of the present invention are reached. In particular it is clear, how the combination of a technique of analysis of a static image or also simply audio, along to a network of video cameras connected to each other on the network makes a research of any person very efficient.

In the case for example of disappeared persons (as kidnapped babies or a dangerous suspect), the comparison made on a main DPC level of the images received by the peripheral DPC to the reference image (4), will allow their identification anywhere they are (still if they are found in areas that are covered by this system). A kidnapped baby can be individuated because both the main DPC before and the peripheral DPC after, are programmed to search that particular person.

It is clear, thus, how the static search made by all the peripheral DPC and/or the main DPC substitutes efficiently a human research. Any part, even the most isolated of the planet, could be monitored. This implies that obliged passages, as stations and airports , will be supplied as needed with a visual research system "instructed" specifically to search for an individual.

In the case, on the other hand, it is needed the individuation of a dangerous person of who the specific identity is unknown, as for example a robber with covered face, both the comparison with the database data contained in the main DPC and the data sent by the peripheral DPC are used.

The reference data can also be a fingerprint left by the criminal and printed on paper, or an image of the iris of the eye or also the voice. In this last case the reference image is obtained thanks to the use of high resolution video cameras connected to the peripheral DPC. The reference image (4) of the person with covered face is thus overlapped to the images as described allowing both the individuation in terms of personal data of the person and its potential placement.

Thus it is clear how the present invention realizes a big database comprising data of video surveillance both for small areas and big areas in order to prevent in an efficient manner crimes in general, search for persons in general and reconstruct the true story of the events.

It is also clear how such system used by safety organizations in charge, as the judiciary activities, is an efficient means of safety for the citizens.

At last it is clear how such invention is an efficient means for judiciary use to realize video maps of criminal facts useful for the individuation of the responsible persons and their guilt in reference to the crimes.

It is intended that the expressions or the terminology used have purely a descriptive aim and for this not limitative.

## Claims

1. Method for the individuation and/or identification of individuals in general comprising at least the operations of:
- Data acquisition of audio and/or video type by means of video cameras (3), said video cameras being placed in predetermined areas of interest and being connected to a peripheral Data Processing Centre (DPC)(2) and wherein a plurality of DPC (2) are placed in different areas;
- Forwarding of said acquired data from said peripherals DPC to a Main Data Processing Centre (DPC) (1) connected to the network with said peripherals DPC (2);
- Insertion of research request relative to a particular individual, said operation of research request comprising the insertion of reference data (4) relative to said individual in the Main DPC (1) and/or in at least one of the peripheral DPC (2) and where said research operation comprises a comparison by image and/or audio overlapping of said acquired data in the Main DPC and/or in at least one of said peripheral DPC with said reference data (4);
whereby, in case of a positive result of said research within the main DPC (1), the main DPC (1) forwards an informative result (5), said result comprising informations about the placement and time of the individual, **characterised in that** the main DPC (1) further forwards said individual's placement to the peripheral DPC (2) that are closer to said placement activating the respective video cameras for a dynamic search and wherein, further, in case of a negative result of said research within the main DPC (1), the main DPC (1) determines the following forwarding of reference data (4) to all or some of said peripheral DPC (2) with the request of search by image overlap of the images that are constantly acquired further to a request by the main DPC.

2. Method for the individuation and/or identification of individuals in general, according to claim 1, where said research operation by means of image overlap is realized in said main DPC (1) through a software, said software converting said reference image and/or video inserted in the main DPC and the images found in its database into numeric matrices where each number of said matrix is associated to a brightness of the image's point.

3. Method for the individuation and/or identification of individuals in general, according to claim 1 and 2, where said comparison by overlap comprises a numerical difference of said reference matrix with said matrices representing said acquired data.

4. Method for the individuation and/or identification of individuals, according to claim 1, where each peripheral DPC (2) effects an overlap operation of the reference image with all the images that are been acquired, said images that are been acquired being elaborated as paused images.

5. Method for the individuation and/or identification of individuals, according to claim 5, where the positive result of said research implies the forward of said information to the main DPC (1), said main DPC transmitting said informative result (5) and activating all the video cameras placed close to the location of finding for a dynamic search of said individual.

6. Method for the individuation and/or identification of individuals, according to one or more of the previous claims, where said operation of audio and/or video data acquisition allows the acquisition of enlarged images such to allow a biometric type image overlap of the individual, as iris of the eye and similar.

7. Method for the individuation and/or identification of individuals, according to one or more of the previous claims, where it is provided a further insertion of informative data into the main DPC by external users, said main DPC being connected through the network to portals of external users.

8. Device for the individuation and/or identification of individuals in general comprising at least:
- Means of data acquisition of audio and/or video and/or biometric data by means of video cameras in general and/or high resolution video cameras, said video cameras being placed in predetermined areas of surveillance and being connected to at least a peripheral Data Processing Centre (DPC)(2);
- At least a Main Data Processing Centre (DPC) (1) connected to the network with said peripheral DPC (2);
- and where at least a part of said peripheral DPC and the Main DPC comprise a conversion software able to make a comparison by image overlap and/or comparison by audio overlap;
- wherein all the peripheral DPC (2) are connected to each other on network allowing a reciprocal communication of information, said peripheral DPC being then connected to the main DPC,
whereby in case of a positive result of said research within the main DPC (1), the main DPC (1) forwards an informative result (5), said result comprising informations about the placement and time of the individual, **characterised in that** the main DPC (1) further forwards said individual's placement to the peripheral DPC (2) that are closer to said placement activating the respective video cameras for a dynamic search and wherein, further, in case of a negative result of said research within the main DPC (1), the maid DPC (1) determines the following forwarding of reference data (4) to all or some of said peripheral DPC (2) with the request of search by image overlap of the images that are constantly acquires further to a request by the main DPC.

9. Device for the individuation and/or identification of individuals in general, according to claim 8, where said Main DPC (1) and/or at least a part of said Peripheral DPC (2) are organized in memories comprising three groups:
- Dynamic images section;
- Static images section;
- Audio section.

10. Device for the individuation and/or identification of individuals in general, according to claim 8, where said software makes a conversion of the images into numeric matrices and their following overlacp.

11. Device for the individuation and/or identification of individuals in general, according to claim 8, 9 and 10, where it is provided at least an external portal connected to said main DPC for the insertion of data by external users.

12. Device for the individuation and/or identification of individuals in general, according to claim 8, where each peripheral DPC (2) along to the video cameras (3) that are directly connected to it is used to control predetermined areas.

## Patentansprüche

1. Verfahren zur Individualisierung und/oder Identifizierung von Personen im Allgemeinen umfassend mindestens die Arbeitsgänge der:
- Datenerfassung vom Typ Audio und/oder Video mittels Videokameras (3), wobei die Videokameras in vorbestimmten Bereichen von Interesse platziert sind und mit einem peripheren Datenverarbeitungszentrum (DPC) (2) verbunden sind, und wobei eine Vielzahl von DPC (2) in unterschiedlichen Bereichen platziert ist;
- Übermittlung der erfassten Daten von den peripheren DPC zu einem Hauptdatenverarbeitungszentrum (DPC) (1), das mit dem Netzwerk der peripheren DPC verbunden ist (2);
- Eingabe von Suchanfragen bezüglich einer bestimmten Person, dabei umfasst der Vorgang der Suchanfrage das Einbringen von Referenzdaten (4) bezüglich der Person in das Haupt-DPC (1) und/oder in mindestens einem der peripheren DPC (2), und wobei der Suchvorgang einen Vergleich durch Bild- und/oder AudioÜberlappung der erfassten Daten im Haupt-DPC und/oder in mindestens einem der peripheren DPC mit den Referenzdaten (4) umfasst;
wobei das Haupt-DPC (1) ein informatives Ergebnis (5) weiterleitet, falls die Suche im Haupt-DPC (1) zu einem positiven Ergebnis führt, das Ergebnis Informationen über den Aufenthaltsort und Zeit der Person umfasst, **dadurch gekennzeichnet, dass** das Haupt-DPC (1) ferner den Aufenthaltsort der Person an die peripheren DPC (2) weiterleitet, die sich näher am Aufenthaltsort befinden, und die entsprechenden Videokameras für eine dynamische Suche aktiviert, und wobei darüber hinaus im Falle eines negativen Ergebnisses der Suche im Haupt-DPC (1) das Haupt-DPC (1) die nachfolgende Weiterleitung von Referenzdaten (4) an alle oder einige der peripheren DPC (2) bestimmt, mit der Anforderung nach der Suche durch Bildüberlappung der Bilder, die auf die Anforderung der Haupt-DPC hin kontinuierlich aufgenommen werden.

2. Verfahren zur Individualisierung und/oder Identifizierung von Personen im Allgemeinen, nach Anspruch 1, wobei der Suchvorgang mit Hilfe von Bildüberlappung in dem Haupt-DPC (1) mittels einer Software durchgeführt wird, und die Software das Referenzbild und/oder die Referenz-Videoaufnahme, die in dem Haupt-DPC eingegeben sind, und die in dessen Datenbank aufgefundenen Bilder in numerische Matrizen umwandelt, wobei jede Zahl der Matrix einer Helligkeit des Bildpunkts zugeordnet ist.

3. Verfahren zur Individualisierung und/oder Identifizierung von Personen im Allgemeinen, nach Anspruch 1 und 2, wobei der Vergleich durch Überlappung eine numerische Differenz der Referenzmatrix mit den Matrizen, die die erfassten Daten darstellen, umfasst.

4. Verfahren zur Individualisierung und/oder Identifizierung von Personen nach Anspruch 1, wobei jedes periphere DPC (2) einen Überlappungsvorgang des Referenzbildes mit allen erfassten Bildern durchführt, wobei die Bilder, die erfasst worden sind, als Standbilder aufbereitet werden.

5. Verfahren zur Individualisierung und/oder Identifizierung von Personen nach Anspruch 5, wobei das positive Ergebnis der Suche die Weiterleitung der genannten Informationen an das Haupt-DPC (1) beinhaltet, und das Haupt-DPC das informative Ergebnis (5) sendet und alle Videokameras, die in der Nähe des Auffindungsorts platziert sind, für eine dynamische Suche nach der Person aktiviert.

6. Verfahren zur Individualisierung und/oder Identifizierung von Personen, nach einem oder mehreren der vorhergehenden Ansprüche, wobei der Vorgang der Audio- und/oder Video-Datenerfassung die Erfassung von vergrößerten Bildern erlaubt, um eine biometrische Bildüberlappung der Person zu ermöglichen, wie die Iris des Auges und Ähnliches.

7. Verfahren zur Individualisierung und/oder Identifizierung von Personen, nach einem oder mehreren der vorhergehenden Ansprüche, wobei eine zusätzliche Eingabe informativer Daten durch externe Benutzer in das Haupt-DPC bereitgestellt wird, wobei das Haupt-DPC über das Netzwerk mit Portalen externer Benutzer verbunden ist.

8. Vorrichtung zur Individualisierung und/oder Identifizierung von Personen im Allgemeinen mindestens umfassend:
- Mittel zur Erfassung von Audio- und/oder Video- und/oder biometrischer Daten mittels Videokameras im Allgemeinen und/oder hochauflösender Videokameras, wobei die Videokameras in vorbestimmten Bereichen der Überwachung platziert werden und mit mindestens einem peripheren Datenverarbeitungszentrum (DPC) (2) verbunden werden;
- Mindestens ein Hauptdatenverarbeitungszentrum (DPC) (1), das mit dem Netzwerk des peripheren DPC (2) verbunden ist;
- und wobei mindestens ein Teil des peripheren DPC und des Haupt-DPC eine Konvertierungssoftware umfasst, die in der Lage ist, einen Vergleich von Bildüberlappung und/oder einen Vergleich durch Audioüberlappung durchzuführen;
- worin alle peripheren DPC (2) miteinander über ein Netzwerk verbunden sind, was eine gegenseitige Kommunikation von Informationen ermöglicht, das periphere DPC dann mit dem Haupt-DPC verbunden wird, wobei das Haupt-DPC (1) ein informatives Ergebnis (5) weiterleitet, falls die Suche im Haupt-DPC (1) zu einem positiven Ergebnis führt, das Ergebnis Informationen über den Aufenthaltsort und die Zeit der Person umfasst, **dadurch gekennzeichnet, dass** das Haupt-DPC (1) ferner den Aufenthaltsort der Person an die peripheren DPC (2) weiterleitet, die sich näher am Aufenthaltsort befinden, und die entsprechenden Videokameras für eine dynamische Suche aktiviert, und wobei darüber hinaus im Falle eines negativen Ergebnisses der Suche im Haupt-DPC (1) das Haupt-DPC (1) die nachfolgende Weiterleitung von Referenzdaten (4) an alle oder einige der peripheren DPC (2) bestimmt, mit der Anforderung nach der Suche durch Bildüberlappung der Bilder, die auf die Anforderung der Haupt-DPC hin kontinuierlich aufgenommen werden.

9. Vorrichtung zur Individualisierung und/oder Identifizierung von Personen im Allgemeinen, nach Anspruch 8, wobei das Haupt-DPC (1) und/oder zumindest ein Teil der peripheren DPC (2) in Datenspeicher organisiert sind, die drei Gruppen umfassen:
- Bereich dynamische Bilder;
- Bereich statische Bilder;
- Bereich Audio.

10. Vorrichtung zur Individualisierung und/oder Identifizierung von Personen im Allgemeinen, nach Anspruch 8, wobei die Software eine Umwandlung der Bilder in numerische Matrizen und deren nachfolgende Überlappung durchführt.

11. Vorrichtung zur Individualisierung und/oder Identifizierung von Personen im Allgemeinen, nach Anspruch 8, 9 und 10, wobei für die Eingabe von Daten durch externe Benutzer mindestens ein externes Portal bereitgestellt wird, das mit dem Haupt-DPC verbunden ist.

12. Vorrichtung zur Individualisierung und/oder Identifizierung von Personen im Allgemeinen, nach Anspruch 8, wobei jedes periphere DPC (2) zusammen mit den Videokameras (3), die direkt mit ihm verbunden sind, zur Kontrolle vorbestimmter Bereiche verwendet wird.

## Revendications

1. Méthode pour l'individualisation et/ou l'identification des individus en général, comprenant au moins les opérations de :
- Acquisition des données de type audio et/ou vidéo au moyen de caméras vidéo (3), les dites caméras vidéo étant placées dans des zones d'intérêt prédéterminées et étant reliées à un centre de traitement des données périphérique (CTD) (2) et dans lesquelles une pluralité de CTD (2) sont placées dans différentes zones ;
- Transmission desdites données acquises à partir des CTD périphériques vers un centre de traitement des données (CTD) principal (1) connecté au réseau avec lesdits CTD périphériques (2) ;
- Insertion d'une demande de recherche relative à un individu en particulier, ladite opération de demande de recherche comprenant l'insertion de données de référence (4) relatives audit individu dans le CTD principal (1) et/ou dans au moins un des CTD périphériques (2) et où ladite opération de recherche comprend une comparaison par image et/ou un chevauchement audio desdites données acquises dans le CTD principal et/ou dans au moins l'un desdits CTD périphériques avec lesdites données de référence (4) ;
de sorte qu'en cas de résultat positif de ladite recherche au sein du CTD principal (1), le CTD principal (1) transmet un résultat informatif (5), le dit résultat comprenant des informations sur l'emplacement et l'heure de l'individu, **caractérisé en ce que** le CTD (1) principal, transmet ensuite l'emplacement desdits individus aux CTD périphériques (2) qui sont plus près dudit emplacement activant les caméras vidéo respectives en vue d'une recherche dynamique et dans lequel, en outre, en cas de résultat négatif de ladite recherche au sein du CTD (1) principal, le CTD (1) détermine la transmission suivante de données de référence (4) suivantes à tout ou partie dudit CTD périphérique (2) avec la demande de recherche par chevauchement d'image des images qui sont acquises en continu suite à une demande émanant du CTD principal.

2. Méthode pour l'individuation et/ou l'identification des individus en général, selon la revendication 1, où ladite opération de recherche par le biais du chevauchement d'image est réalisée dans ledit CTD principal (1) grâce à un logiciel, ledit logiciel convertissant l'image et/la vidéo de référence insérée dans le CTD principal et les images trouvées dans sa base de données, en matrices numériques où chaque numéro de ladite matrice est associée à une luminosité du point de l'image.

3. Méthode pour l'individuation et/ou l'identification des individus en général, selon la revendication 1 ou 2, où ladite comparaison par chevauchement comprend une différence numérique de ladite matrice de référence avec lesdites matrices représentant lesdites données acquises.

4. Méthode pour l'individuation et/ou l'identification des individus, selon la revendication 1, où chaque CTD périphérique (2) effectue une opération de chevauchement de l'image de référence avec toutes les images acquises, lesdites images acquises étant élaborées sous forme d'images en pause.

5. Méthode pour l'individuation et/ou l'identification des individus, selon la revendication 5, où le résultat positif de ladite recherche implique la transmission de ladite information au CTD principal (1), ledit CTD principal transmettant ledit résultat informatif (5) et activant toutes les caméras vidéo placées à proximité de l'emplacement de résultat pour une recherche dynamique dudit individu.

6. Méthode pour l'individuation et/ou l'identification des individus, selon l'une ou plusieurs des revendications précédentes, où ladite opération d'acquisition de données audio et/ou vidéo permet l'acquisition d'images agrandies afin de permettre un chevauchement d'image de type biométrique de l'individu, tel que l'iris ou l'oeil et autres choses similaires.

7. Méthode pour l'individuation et/ou l'identification des individus, conformément à l'une ou plusieurs des revendications précédentes, où il est prévu une autre insertion de données informatives dans le CTD principal par les utilisateurs externes, ledit CTD principal étant connecté par le biais du réseau aux portails des utilisateurs externes.

8. Dispositif pour l'individualisation et/ou l'identification des individus en général, comprenant au moins :
- Des moyens d'acquisition de données des données audio et/ou vidéo et/ou biométriques au moyen de caméras vidéo en général et/ou de caméras vidéo haute résolution, lesdites caméras vidéo étant placées dans des zones prédéterminées de surveillance et étant reliées à au moins un centre de traitement des données (CTD) périphérique (2);
- Au moins un centre de traitement des données (CTD) principal (1) connecté au réseau avec ledit CTD périphérique (2) ;
- et où au moins une partie dudit CTD périphérique et le CTD prinipal comprennent un logiciel de conversion en mesure de faire une comparaison par chevauchement d'image et/ou comparaison par chevauchement audio ;
- dans laquelle tous les CTD périphériques (2) sont connectés les uns aux autres sur un réseau permettant une communication réciproque d'informations, ledit CTD périphérique étant alors connecté au CTD principal, de sorte qu'en cas de résultat positif de ladite recherche au sein du CTD (1) principal, le CTD (1) principal transmet ensuite un résultat informatif (5), ledit résultat comprenant des informations sur l'emplacement et l'heure de l'individu, **caractérisé en ce que** le CTD (1) principal transmet ensuite l'emplacement desdits individus aux CTD périphériques (2) qui sont plus près dudit emplacement activant les caméras vidéo respectives en vue d'une recherche dynamique et dans lequel, en outre, en cas de résultat négatif de ladite recherche au sein du CTD (1) principal, ledit CTD (1) détermine la transmission suivante des données de référence (4) vers tout ou partie dudit CTD périphérique (2) avec la demande de recherche par chevauchement d'image des images acquises en continu suite à une demande émanant du CTD principal.

9. Dispositif l'individuation et/ou l'identification des individus en général, selon la revendication 8, où ledit CTD principal (1) et/ou au moins une partie dudit CTD périphérique (2) sont organisés en mémoires comprenant trois groupes :
- Section des images dynamiques ;
- Section des images statiques ;
- Section audio ;

10. Dispositif pour l'individualisation et/ou l'identification des individus en général, selon la revendication 8, où ledit logiciel fait une conversion des images en matrices numériques et leur chevauchement consécutif.

11. Dispositif pour l'individualisation et/ou l'identification des individus en général, selon la revendication 8, 9 et 10, où il est prévu au moins un portail externe connecté audit CTD principal pour l'insertion de données par les utilisateurs externes.

12. Dispositif pour l'individuation et/ou l'identification des individus en général, selon la revendication 8, où chaque CTD périphérique (2) le long des caméras vidéo (3) qui sont lui directement connectées est utilisé pour contrôler les zones prédeterminées.
